# EUROPEAN PATENT APPLICATION

(11) **EP 4 718 834 A1**
(43) Date of publication of application: **01.04.2026**
(21) Application number: 25202840.2
(22) Date of filing: 17.09.2025
(51) Int. Cl.: H04N 1/60

(54) **INFORMATION PROCESSING APPARATUS, CONTROL METHOD, AND STORAGE MEDIUM**

(30) Priority: 25.09.2024 JP 2024166047
(71) Applicant: Canon Kabushiki Kaisha, Tokyo, 146-8501 (JP)
(72) Inventor: NAKASHIO, Hidekazu, Tokyo, 146-8501 (JP); SHINDO, Yukihiro, Tokyo, 146-8501 (JP); YAMADA, Michihiko, Tokyo, 146-8501 (JP); NAKATANI, Yuki, Tokyo, 146-8501 (JP); KIMURA, Takumi, Tokyo, 146-8501 (JP)
(74) Representative: Canon Europe Limited

(57) **Abstract**

In color verification based on a user-specific standard, there is an issue that it is difficult to create a user-specific color verification specification. A method for controlling an information processing apparatus configured to perform color measurement on a color patch arranged on a chart output by an image forming apparatus and verify color accuracy of the image forming apparatus includes acquiring a color verification specification, acquiring image data, determining, in the acquired image data, a color corresponding to a color that does not exist in the acquired color verification specification, and adding the color corresponding to the color that does not exist in the color verification specification to a color verification chart and the color verification specification.

## Description

### Technical Field

The present disclosure relates to an information processing apparatus that verifies color accuracy of an image forming apparatus, a control method, and a storage medium.

### BACKGROUND

Generally, commercial color printers regularly perform color management in order to ensure a certain level of color reproducibility. Color management is performed by comparing a target color defined by standards of the International Organization for Standardization (ISO) and the like with a color actually printed by a printer (printed color) and checking whether color accuracy meets an acceptance criterion (allowable value).

In a case where the color accuracy does not meet the allowable value, it is necessary to recreate a print profile and perform correction processing using a color correction function of the printer in order to improve the color accuracy. However, these tasks consume labor and time and are demanded to be performed efficiently. Japanese Patent No. 7207052 focuses on the fact that a high saturation portion of a color gamut tends to fluctuate largely due to the surrounding environment and degradation of durability of a printer and proposes incorporating a portion of high saturation colors into a color management chart and storing measurement information to facilitate understanding of the printer's condition.

### SUMMARY

However, the above-described conventional technique has the following issues. For example, in a case where color verification is performed based on a user-specific standard, it is difficult to create a user-specific color verification specification.

The present disclosure is made in consideration of at least one of the above-described issues and is directed to the provision of a mechanism that prompts the user, at the time of registering a color verification test, to check whether key colors of interest to the user are included in the color verification specification, and enables simplified incorporation of such colors if they are not included.

The present disclosure in its first aspect provides an information processing apparatus as specified in claim 1. Optional features are specified in claims 2 to 10.

The present disclosure in its second aspect provides a method for controlling an information processing apparatus as specified in claim 11.

The present disclosure in its third aspect provides a non-transitory computer-readable storage medium for controlling an information processing apparatus as specified in claim 12.

Features of the present disclosure will become apparent from the following description of embodiments with reference to the attached drawings. The following description of embodiments is described by way of example.

### BRIEF DESCRIPTION OF THE DRAWINGS

Fig. 1 is a schematic diagram illustrating an overall configuration of a color verification system according to an embodiment.
Figs. 2A to 2D illustrate examples of patch signal values and color characteristics of a color verification chart according to an embodiment.
Fig. 3 is a block diagram illustrating a hardware configuration of a color verification apparatus and a control apparatus according to an embodiment.
Fig. 4 is a block diagram illustrating a main functional configuration of the color verification apparatus according to an embodiment.
Fig. 5 is a sequence diagram illustrating a process in the color verification system according to an embodiment.
Figs. 6A to 6N illustrate examples of a display unit according to an embodiment.
Figs. 7A to 7D illustrate examples of sample display on the display unit according to an embodiment.
Fig. 8 illustrates a color determination process according to an embodiment.
Fig. 9 illustrates a color addition process according to an embodiment.
Fig. 10 illustrates an evaluation item addition process according to an embodiment.
Fig. 11 illustrates a target value registration process according to an embodiment.
Fig. 12 illustrates a configuration of a profile according to an embodiment.
Fig. 13 illustrates a schematic flow of a color matching processing procedure according to an embodiment.
Fig. 14 illustrates a color measurement condition table according to an embodiment.
Fig. 15 illustrates formulae for calculating a color difference according to an embodiment.
Fig. 16 illustrates an allowable value table according to an embodiment.

### DESCRIPTION OF THE EMBODIMENTS

Embodiments of the present disclosure will be described in detail below with reference to the accompanying drawings. It is noted that the following embodiments are not intended to limit the scope of the present disclosure as encompassed by the appended claims. A plurality of features is described in the embodiments, but not all of these features are essential to the present disclosure, and the plurality of features may be combined as appropriate. Further, the same or similar components in the attached drawings are denoted by the same reference numerals, and redundant description will be omitted. Each of the embodiments of the present invention described below can be implemented solely or as a combination of a plurality of the embodiments or features thereof where necessary or where the combination of elements or features from individual embodiments in a single embodiment is beneficial.

### [First Embodiment]

According to a first embodiment, in a case where color verification is performed using a color verification specification that is uniquely defined by a user, it is checked whether a key color defined by the user in registering a color verification test is included (exists) in the color verification specification. A process for incorporating the key color into the color verification specification if it is not included will be described. Specifically, a document owned by the user is used to determine an area corresponding to a color to be used in color verification, a color that is not used in the color verification is extracted from the colors in the document, and the extracted color is added to a color verification chart. Accordingly, a user-specific color verification specification can be easily created.

### <System Configuration>

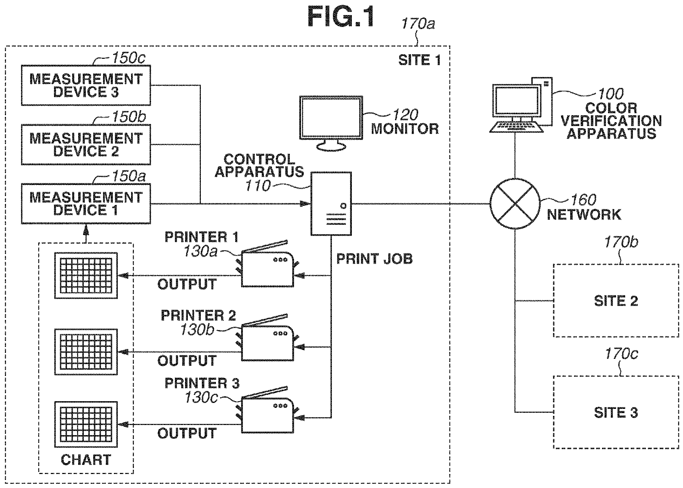

Initially, a configuration example of a color verification system according to the present embodiment is described with reference to Fig. 1. In a case where the present color verification system verifies color accuracy, initially, a predetermined chart is printed out from a verification target printer. Next, a measurement device performs color measurement on a color patch on the chart that has been printed out, and acquired color measurement data is transmitted to a color verification apparatus 100. Then, the color verification apparatus 100 checks the deviation (color accuracy) between a printed color and a target color. A color patch arranged on a chart is also referred to as a color chart or a color sample and is simply referred to as a "patch" in the present specification.

As illustrated in Fig. 1, in the color verification system according to the present embodiment, the color verification apparatus 100 is connected to sites 1 to 3 over a network 160. The site 1 includes a control apparatus 110, a monitor 120, printers 1 to 3 (130a to 130c), and measurement devices 1 to 3 (150a to 150c).

Additionally, each of the sites 2 and 3 includes a control apparatus, a monitor, printers, and measurement devices, as well. A relationship between the site 1 and the color verification apparatus 100 is described below as an example.

The color verification apparatus 100 compares a predefined target color (target color) with a color actually printed by the printer (printed color) and verifies whether color accuracy meets an acceptance criterion. The color verification apparatus 100 is connected to the control apparatus 110 via the network 160 so that they can communicate with each other.

The control apparatus 110 is connected to the printers 130a to 130c in the site 1 via a communication network such as an intranet, enabling mutual communication. The control apparatus 110 issues print instructions to the printers, and centrally manages the color accuracy of each printer, among other operations. In issuing a print instruction, for example, the control apparatus 110 can receive a print job from a client terminal (not illustrated), divide the print job into predetermined units (e.g., by copy or by page), and distribute the print job across a plurality of printers, to instruct them to perform printing.

A print job includes a page description language (PDL) data portion, which describes drawing commands for objects of various attributes such as text, graphics, and photographs on a per-page basis, as well as print setting information that specifies printing conditions, such as sheet size and type, and single- or double-sided printing. By issuing instructions to perform distributed printing across a plurality of printers for a single print job, both a time required for printing and a print waiting time can be reduced.

The monitor 120 is connected to the control apparatus 110 and displays various user interface screens (UI screens).

The printers 1 to 3 (130a to 130c) print color images on sheets based on a print job issued from the control apparatus 110 using, for example, an electrophotographic process technique. The printers 1 to 3 may be monochrome printers or printers based on other image forming techniques, such as inkjet. The printers 1 to 3 may be multifunction peripherals that have a copy function and a facsimile (FAX) function in addition to a print function.

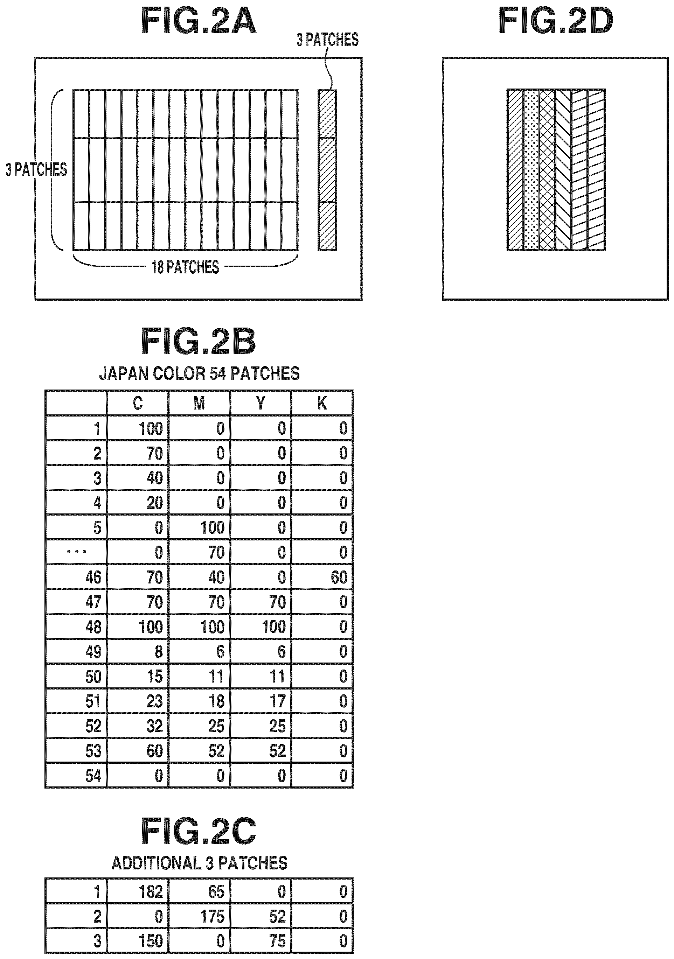

The measurement devices 1 to 3 (150a to 150c) are spectrometers that measure a color value of an object based on a reflectance or a transmittance of visible light having a wavelength of about 400 nm to 700 nm. The measurement devices 1 to 3 are provided, for example, for each site. The measurement devices 1 to 3 each convert a wavelength acquired from respective patches on a chart printed out from the printers 1 to 3 into a value in, for example, an L*a*b* color space and a XYZ color space to acquire color measurement data. Fig. 2A illustrates an example of a chart, and Fig. 2B indicates target color values (red, green, and blue (RGB) values) defined in an RGB color space corresponding to each patch (patch number 1 to 729) of the chart.

The measurement devices 1 to 3 incorporate line sensors or area sensors for scanning a chart. For example, in a case of a sheet-through type automatic document reading measurement device, incorporating a line sensor enables the measurement device to pre-scan a chart, thereby allowing the measurement device to detect the positions of the patches to be measured and perform the measurement. In a case of a measurement device that can automatically feed sheets and continuously perform measurement, incorporating an area sensor enables the measurement device to pre-scan a chart, thereby allowing the measurement device to detect the positions of the patches to be measured and perform the measurement.

A portable (handy type) measurement device can also be adopted, but in that case, a separate scanner for scanning a chart is connected to the control apparatus 110. In the case of the sheet-through type automatic document reading measurement device, such a scanner is connected to the control apparatus 110 using, for example, a Universal Serial Bus (USB) port or the like, measures a color value of each patch on a chart printed out from the target printer to acquire color measurement data as illustrated in Fig. 2C.

The acquired color measurement data is transmitted to the color verification apparatus 100 via the control apparatus 110. In a case where the color verification apparatus 100 is installed in one of the sites 1 to 3, the color verification apparatus 100 may be directly connected to the measurement device so that the color verification apparatus 100 can acquire the color measurement data without involvement of the control apparatus 110.

The network 160 is, for example, a local area network (LAN), the Internet, an intranet, and the like and may be wired or wireless.

The sites 1 to 3 (170a to 170c) correspond to locations of printing companies where printers are installed. For example, the site 1 is a print site in Tokyo, the site 2 is a print site in Osaka, and the site 3 is a print site in Fukuoka.

A configuration of the color verification system illustrated in Fig. 1 is an example, and the number of sites and the configuration of apparatuses in each site can be changed appropriately. For example, the color verification apparatus 100 may be configured to be directly connected to the control apparatus 110 and/or the measurement devices 1 to 3 via the communication network, such as an intranet, to manage color accuracy of a plurality of the printers 1 to 3. Alternatively, for example, an information processing apparatus having functions of both the color verification apparatus 100 and the control apparatus 110 may be installed in each site and manage color accuracy of the plurality of printers 1 to 3 in the corresponding site.

### [Hardware Configuration of Color Verification Apparatus/Control Apparatus]

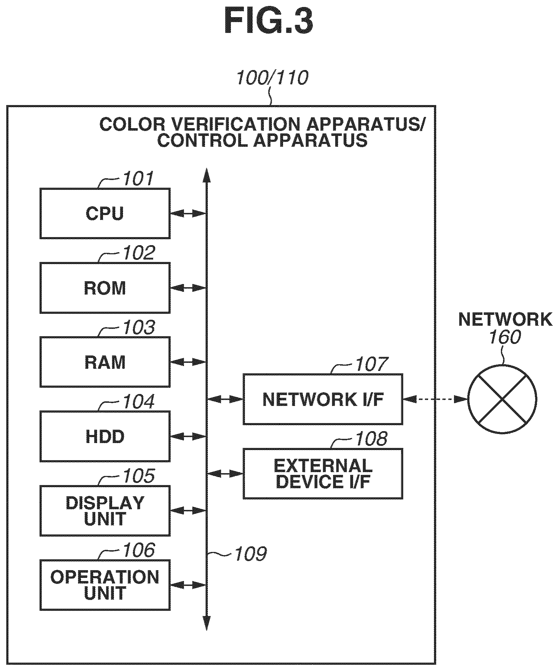

Next, a hardware configuration of an information processing apparatus according to the present embodiment is described with reference to Fig. 3. The information processing apparatus according to the present embodiment corresponds to at least one of the above-described color verification apparatus 100 and control apparatus 110 and is realized by, for example, a general-purpose laptop/desktop personal computer or a tablet terminal.

The color verification apparatus 100 and the control apparatus 110 may be provided integrally. Thus, the color verification apparatus 100 and the control apparatus 110 are an example of an information processing apparatus. The color verification apparatus 100 and the control apparatus 110 each include a central processing unit (CPU) 101, a read-only memory (ROM) 102, a random access memory (RAM) 103, a hard disk drive (HDD) 104, a display unit 105, an operation unit 106, a network interface (I/F) 107, and an external device I/F 108. Each of the units 101 to 108 is connected via a system bus 109 to be able to transmit and receive data to and from each other.

The CPU 101 is an arithmetic processing apparatus that controls the entire apparatus and executes various types of image processing, which will be described below, based on programs stored in the ROM 102. The ROM 102 is a read-only memory and stores a boot program, processing programs, character data, character code information, and the like. The RAM 103 is a random access memory and is used as a working memory in a case where the CPU 101 executes various programs.

The HDD 104 is used as a data storage area for an image file received from the network I/F 109. The HDD 104 is used to store a result of arithmetic processing executed by the CPU 101, various programs, information files, and the like. The display unit 105 is configured with, for example, a liquid crystal display or the like and displays a user interface screen for performing various settings and checking an apparatus state or the like.

The operation unit 106 is configured with a keyboard, a button, and/or other devices and is used by a user to input and reset various setting values. The network I/F 107 is an interface that connects the color verification apparatus 100 and the control apparatus 110 to the network 160. The color verification apparatus 100 and the control apparatus 110 each can transmit and receive various types of information to and from an external device via the network I/F 107.

The external device I/F 108 is used for connecting external devices, such as the measurement devices 1 to 3, via a communication bus, for example, a universal serial bus (USB) or the like.

### <Software Configuration of Color Verification Apparatus>

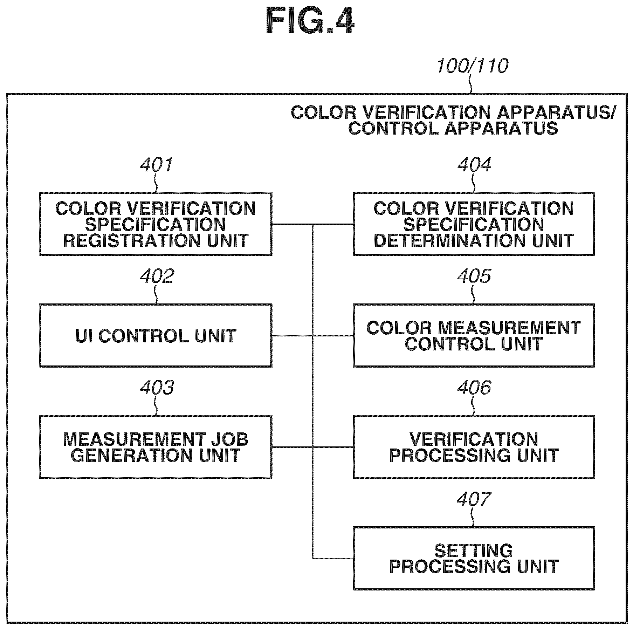

Next, a software configuration of the information processing apparatus (the color verification apparatus 100 and the control apparatus 110) according to the present embodiment is described with reference to Fig. 4. Here, only a main functional configuration according to the present disclosure is described. Thus, it is not meant to exclude other configurations.

The color verification apparatus 100 and the control apparatus 110 include a color verification specification registration unit 401, a UI control unit 402, a measurement job generation unit 403, a color verification specification determination unit 404, a color measurement control unit 405, a verification processing unit 406, and a setting processing unit 407. Each of these functional units is realized by the CPU 101 executing a predetermined program. Each of the functional units is described below.

The color verification specification registration unit 401 registers a chart on which patches of various colors corresponding to the corresponding target color values are arranged, the printer that performs color verification, the measurement device and the color measurement conditions that are used for the color verification, an allowable value in performing the color verification, and the like for each type of the color verification. Specifically, the chart to be registered is stored in the HDD 104 in association with image data and information (chart configuration information) that indicates a configuration of the chart, such as the number and size of patches on the chart.

Charts can be broadly classified into predetermined charts that conform to standards such as those of the International Standards Organization (ISO) and custom charts that are uniquely defined by a user. The predetermined chart is registered in advance prior to a start of use, for example, at the time of installing a program for the color verification. The custom chart is registered at any desired timing based on a user input via the operation unit 106. The printer that performs the color verification is registered from among the printers 130a, 130b, and 130c that are connected to the control apparatus 110.

The measurement device to be used for the color verification is registered from among the measurement devices 150a, 150b, and 150c. For the color measurement conditions used in performing the color verification, the color measurement conditions defined by the Japan Color certification, which conforms to ISO, or the like are registered. Similarly, the allowable value used in performing the color verification is registered based on the Japan Color certification, which conforms to ISO, or the like. The allowable value is a value used to compare a specified target color (target color) with a color actually printed by the printer (printed color) and to check whether the color accuracy meets the acceptance criterion (allowable value).

For example, in a case where a determination is made based on the difference (color difference) between a color value (target value) of the target color and a color value (measured value) of the printed color, the value of the color difference is registered as the allowable value. If the difference falls within the allowable value, it is determined that the color accuracy meets the acceptance criterion. In a case where the color verification is executed, a user selects a color verification specification from the color verification specifications registered by the color verification specification registration unit 401, the measurement job generation unit 403 generates a measurement job, and thus the color verification is started.

The UI control unit 402 controls display of a user interface screen for a user to check a state of each apparatus in the color verification system, input and select various setting values, issue instructions to start various types of processing, and the like. The user interface screen to be displayed will be described below.

The measurement job generation unit 403 selects a color verification test to be executed from among the color verification specifications that the user registered using the color verification specification registration unit 401 and generates as a measurement job. Subsequently, the measurement job generation unit 403 generates a chart based on the chart configuration information corresponding to the selected color verification test.

The color verification specification determination unit 404 determines an area where the color(s) to be used for the color verification in the color verification specification specified by the user is/are used in the image data specified by the user. The color verification specification determination unit 404 extracts a color that does not exist in the color verification specification from the image data and adds the extracted color to the color verification chart.

The color measurement control unit 405 executes pre-scanning in measuring the color of the chart and executes color measurement of the chart.

The verification processing unit 406 uses the color measurement data received from the measurement device 150a to execute verification processing to determine whether the color accuracy of the target printer meets the acceptance criterion.

The setting processing unit 407 sets various parameters related to the verification processing based on a user selection via a predetermined user interface screen and the like.

### <Processing in Entire System>

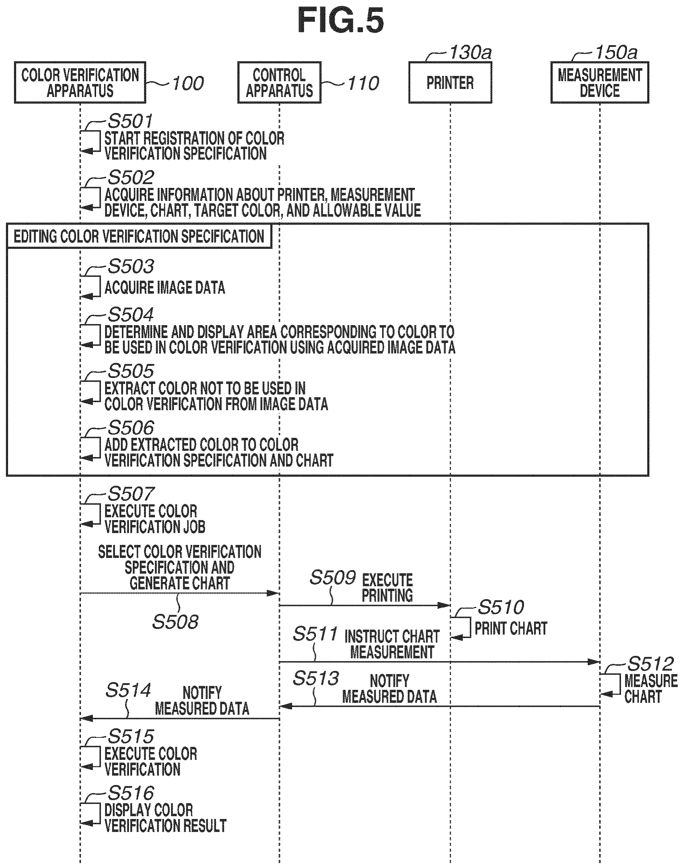

Next, a processing sequence in registering the color verification specification in the color verification system according to the present embodiment is described with reference to Fig. 5. In the processing sequence described below, a case is assumed in which the color verification apparatus 100 registers the color verification specification and causes the printer 130a to output a chart, thus performing the color verification for the printer 130a using the measurement device 150a. An example is described in which various operation screens described below are displayed on the display unit 105 of the color verification apparatus 100, but the present disclosure is not limited to this example, and the various operation screens may be displayed on the display unit 105 of the control apparatus 110 or other display units.

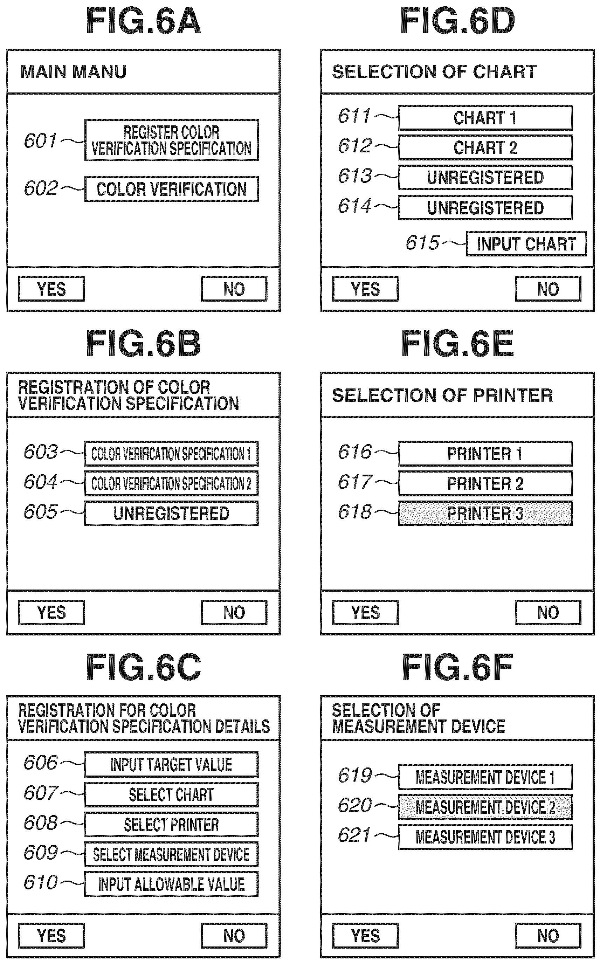

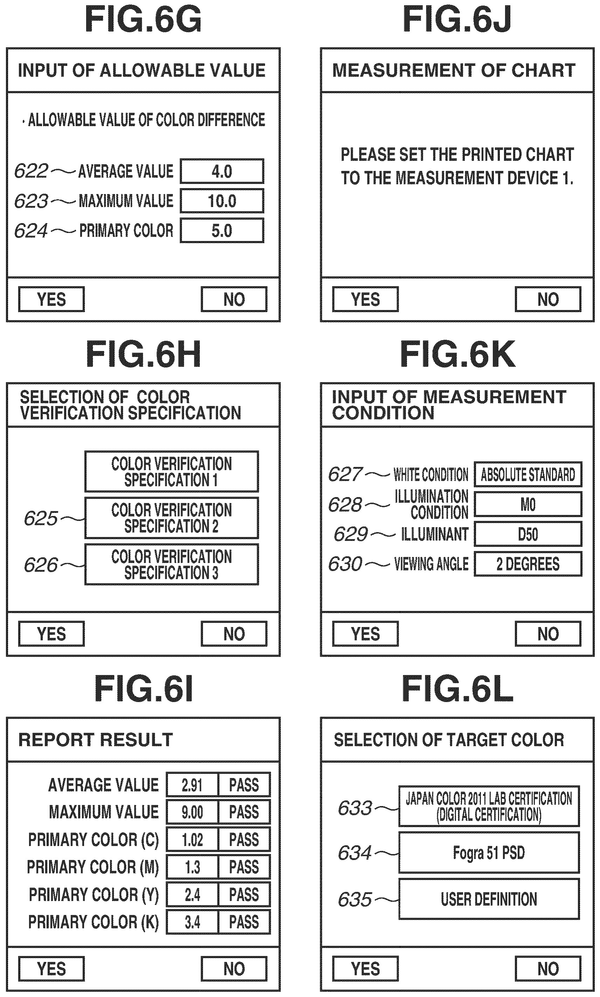

In step S501, the color verification specification registration unit 401 starts registering the color verification specification based on a user input. If a user who wants to register the color verification specification presses a color verification specification registration button 601 on a main menu screen illustrated in Fig. 6A, the screen transitions to a color verification specification registration screen illustrated in Fig. 6B. The UI control unit 402 controls these UI screens.

If the user presses the color verification specification to be registered and/or edited in display areas 603 to 605 on the color verification specification registration screen in Fig. 6B, the screen transitions to a detailed selection screen for color verification specification illustrated in Fig. 6C.

In step S502, the color verification specification registration unit 401 acquires a list of the printers 1 to 3 managed by the control apparatus 110 and information indicating a status of each printer (hereinbelow, referred to as "printer status information"). Here, the printer status information includes information about, for example, a power status (ON/OFF), presence or absence of malfunctions, and a print job processing status (printing/waiting). The printer status information is acquired by the control apparatus 110 by regularly accessing the printers 1 to 3 and stored therein. The list of printers and the printer status information for each printer are collectively referred to as "printer information".

Next, the color verification specification registration unit 401 receives pressing of "selection of printer" in a display area 608 on the detailed selection screen for color verification specification in Fig. 6C. Subsequently, the screen transitions to a printer selection screen illustrated in Fig. 6E, and processing for receiving a selection of the printer to be a target of color verification (hereinbelow, referred to as a "target printer") is performed. Specifically, the selection by the user is received via the UI screen displayed on the display unit 105 by the UI control unit 402, and the setting processing unit 407 sets the printer corresponding to the selection (the printer 1 in this case) as the target printer.

Fig. 6E illustrates the printer selection screen for a user to select the target printer.

Display areas 616 to 618 on the printer selection screen display a list of printers that can be processing targets (the printers 1 to 3 in this case) according to the printer information acquired in step S502. At this time, display processing is performed in which, for example, a printer that is not available for printing is grayed out so that it is clear whether the printer is in a printable state or an unprintable state based on the printer status information. Only the printer 3 is grayed out on the printer selection screen in Fig. 6E, which indicates that the printer 3 is not available for printing.

Next, the color verification specification registration unit 401 acquires a list of the measurement devices 1 to 3 managed by the control apparatus 110, specification information for each measurement device, and information indicating a status of each measurement device (hereinbelow, referred to as "measurement device status information"). Here, the specification information indicates specifications of the corresponding measurement device, such as a paper size and a minimum patch size that the measurement device can handle and the minimum/maximum number of patches per sheet (per page). In a case of the measurement device that includes an accessory, the specification information also includes the difference in specifications depending on whether the accessory is included. Here, the accessory refers to an item such as a measuring ruler and an automatic sheet feeding unit.

A measuring ruler is a device that assists a sliding operation during measurement to enable a handy type measurement device to perform stable color measurement. A sensor installed on a rear surface of the measurement device detects a stripe pattern of the measuring ruler and thus can detect a direction in which a user performs measurement (measuring from left to right, measuring from right to left, or the like). An automatic sheet feeding unit is a device that automatically loads the chart printed out from the printer into the measurement device to enable continuous color measurement. The measurement device status information includes information about, for example, a power status (ON/OFF) and a connection state.

It is assumed that the control apparatus 110 accesses the measurement devices 1 to 3 in advance or regularly to acquire and store the specification information and the measurement device status information. A list of measurement devices and the specification information for each measurement device, and the measurement device status information for each measurement device are collectively referred to as "measurement device information".

Next, the color verification specification registration unit 401 receives pressing of "selection of measurement device" in a display area 609 on the detailed selection screen for color verification specification in Fig. 6C. Subsequently, the screen transitions to a measurement device selection screen illustrated in Fig. 6F, and processing for receiving a selection of the measurement device to be used in measurement of a color value of the chart is performed. More specifically, the selection by the user is received via the UI screen displayed on the display unit 105 by the UI control unit 402, and the setting processing unit 407 sets the measurement device corresponding to the selection as the measurement device to be used for chart measurement.

Fig. 6F illustrates the measurement device selection screen for a user to select the measurement device. Display areas 619 to 621 on the measurement device selection screen display a list of measurement devices that can be processing targets (the measurement devices 1 to 3 in this case) according to the measurement device information acquired in step S504. At this time, display processing is performed, based on the measurement device status information, in which, for example, the measurement device that is not available for measurement is grayed out so that the user can see whether each measurement device is in an available state or an unavailable state.

In Fig. 6F, only the measurement device 2 is grayed out on the measurement device selection screen, which indicates that the measurement device 2 is in an unavailable state. Next, the screen transitions to a color measurement condition input screen illustrated in Fig. 6K, and processing for receiving the color measurement condition is performed in performing color measurement. Specifically, the UI control unit 402 receives the selection made by the user is received via the UI screen displayed on the display unit 105, and the setting processing unit 407 sets the color measurement condition related to the selection.

Fig. 6K illustrates the color measurement condition input screen for a user to input various color measurement conditions.

The color measurement conditions include a white condition 627, an illumination condition 628, an illuminant 629, a viewing angle 630, and the like, but are not limited to these. The white condition 627 includes a "paper white reference" based on a white background of a printing sheet and an "absolute white reference" based on a white reference plate (white tile) of the color measurement device, so that the user select either of them.

The illumination condition 628 indicates "M0", "M1", "M2", and "M3" standardized by ISO 13655, and the user selects one of them. For the illuminant (observation light source) 629, the user selects a type of light source data incorporated in calculating L*a*b* values. Types of the illuminant 629 include "A", "D50", "D65", and the like. The viewing angle 630 relates to a viewing angle (size of an object) at which a human observes an object and is selected from ISO-defined options, such as "2 degree viewing angle" and "10 degree viewing angle".

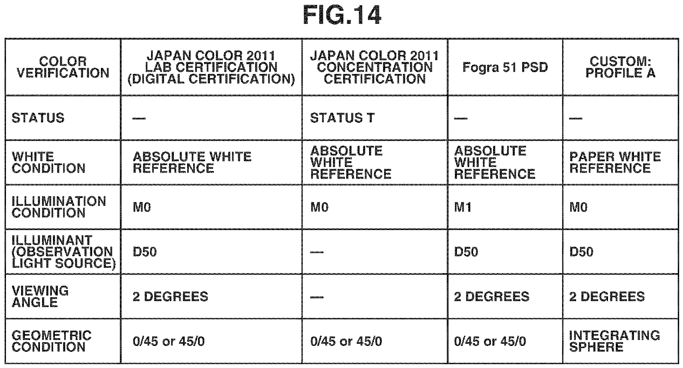

In a case where the color verification is executed according to the Japan Color certification or Fogra certification, both of which conform to the ISO international standard, the color measurement conditions are determined in advance according to the type of color certification. Thus, a configuration may be adopted in which a user registers only the type of color certification, and the color measurement conditions are automatically registered within the color verification specification registration unit 401 according to the type of color certification. In such a case, the color measurement conditions corresponding to the corresponding color certifications are stored in advance as a table as illustrated in Fig. 14, and the color measurement conditions corresponding to the selected type of color certification are registered by referring to the table.

A configuration may be adopted in which a user or an administrator who executes color verification can register and delete the color measurement conditions that are uniquely defined by them. For example, the administrator adds the color certification described as "Custom: Profile A" as illustrated in Fig. 14 to the table in advance. Subsequently, a user who executes the color verification selects "Custom: Profile A", so that the color measurement conditions may be automatically registered within the color verification specification registration unit 401.

According to the present embodiment, the color measurement conditions that can be used may differ depending on the measurement device, so that the color measurement conditions are registered after the measurement device is selected. Alternatively, a "selection of color measurement conditions" menu may be provided on the screen illustrated in Fig. 6C so that the measurement device and the color measurement conditions can be registered individually.

Next, if the user presses "selection of chart" in a display area 607 on the detailed selection screen for color verification specification in Fig. 6C, the screen transitions to a chart selection screen illustrated in Fig. 6D. The user selects the chart to be used in the color verification from display areas 611 to 614 on the chart selection screen illustrated in Fig. 6D. "Chart 1" and "chart 2" in the display areas 611 and 612 on the chart selection screen in Fig. 6D are the predetermined charts that have been registered and defined in accordance with standards, such as ISO.

After the user presses a chart input button 615, the user performs operations such as inputting various types of information to be used to register the custom chart. Specifically, registration is completed by inputting a name, the number of patches, a patch size, and sheet size and type regarding the custom chart to be registered and uploading image data. A chart image is created in a file format, such as a Tagged Image File Format (TIFF), a Portable Document Format (PDF), and a Joint Photographic Experts Group (JPEG).

Accordingly, a chart is registered in "unregistered" in display areas 613 and 614 on the chart selection screen in Fig. 6D. A list of charts that have been registered and the chart configuration information for each chart are collectively referred to as "chart information".

Next, the color verification specification registration unit 401 receives pressing of "input allowable value" as a display area 610 on the detailed selection screen for color verification specification in Fig. 6C. Subsequently, the screen transitions to an allowable value input screen as illustrated in Fig. 6G, and processing for receiving data, such as the allowable value, for a verification item for each patch in the chart used is performed. Specifically, the UI control unit 402 receives the user's selection via the UI screen displayed on the display unit 105, and the setting processing unit 407 sets the allowable value of the verification item corresponding to the selection.

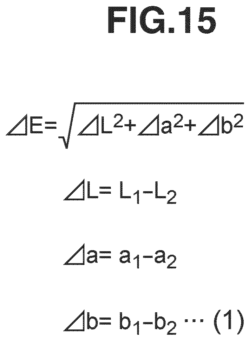

Fig. 6G illustrates the allowable value input screen for the user to input the allowable value of the verification item. The verification items include, for example, an average value of color difference ΔE per patch, a maximum value of the color difference ΔE per patch, the color difference ΔE for primary colors (CMYK), and the like, and the allowable value is set to the corresponding verification item. Fig. 6G illustrates a color verification setting screen for setting the allowable values corresponding to the corresponding verification items. The user sets the allowable values corresponding to the corresponding verification items in advance via the UI screen as described above. Here, the color difference ΔE is the linear distance between the target color value in the L*a*b* color space and a color value (color measurement value) indicated by the color measurement data and can be acquired by using, for example, Equation (1) as illustrated in Fig. 15.

It is now assumed that the allowable value of the color difference is set for each verification item as illustrated on the color verification setting screen in Fig. 6G. In this case, if the average value of the color difference ΔE for each patch falls within ±4.0, the maximum value of the color difference ΔE falls within ±10.0, and the color difference ΔE for the primary colors (CMYK) (ΔE_primary colors) falls within ±5.0, the result is considered acceptable (pass). On the other hand, if any of the verification items exceeds the allowable value, the result is considered unacceptable (fail).

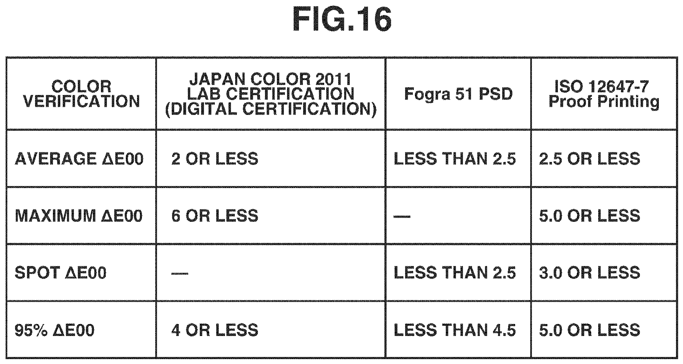

As in the color measurement conditions, in a case where the color verification is executed according to the Japan Color certification or Fogra certification, both of which conform to the ISO international standard, the respective allowable values are also defined according to the type of color certification. Thus, a configuration may be adopted in which the user registers only the type of color certification, and the respective allowable values are automatically registered within the color verification specification registration unit 401 according to the type of color certification. In that case, the allowable values corresponding to color certification are stored in advance as a table as illustrated in Fig. 16, and the allowable values corresponding to the type of color certification are registered by referring to the table.

Next, the color verification specification registration unit 401 receives pressing of "input target value" in a display area 606 on the detailed selection screen for the color verification specification in Fig. 6C. Subsequently, the screen transitions to a target value input screen illustrated in Fig. 6I, and processing for receiving the target value for each patch on the chart used is performed.

Specifically, the UI control unit 402 receives the user's selection via the UI screen displayed on the display unit 105, and the setting processing unit 407 sets the target color value corresponding to the selection.

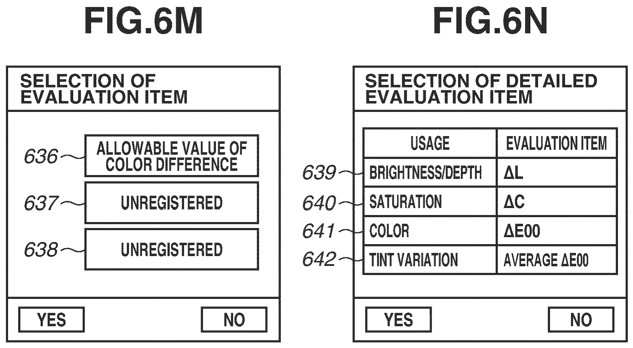

Fig. 6M illustrates the target value input screen for a user to input the target value. According to the present embodiment, since color verification according to the Japan Color certification (633) or Fogra certification (634), both of which conform to international standard is described as an example, the target value is also determined according to the type of color certification. Thus, a user registers only the type of color certification, and the target value is automatically registered within the color verification specification registration unit 401 according to the type of color certification. In such a case, the target value corresponding to the color certification is stored in advance in the HDD 104, and the target value corresponding to the type of color certification is registered by referring to the data.

In step S503, the color verification specification determination unit 404 acquires image data including the key color of interest to the user. Specifically, the image data input by the user is received via the UI screen displayed on the display unit 105 by the UI control unit 402, and the color verification specification determination unit 404 acquires the image data.

In step S504, the color verification specification determination unit 404 determines an area in the image data acquired in step S503 in which the color(s) to be used in the color verification (the color(s) to be used in the chart acquired in step S502) is used. A specific process will be described below.

In step S505, the color verification specification determination unit 404 extracts the color that does not exist in the color verification in the image data acquired in step S503 (the color that is not used in the chart acquired in step S502) based on the determination result in step S504. A specific process will be described below.

In step S506, the color verification specification determination unit 404 adds the color that is determined to be absent from the color verification in step S505 to the chart selected in step S502 and performs re-registration. Specifically, the color verification specification determination unit 404 registers the edited chart 3 in the unregistered display area 613 on the chart selection screen illustrated in Fig. 6D.

Similarly, the color verification specification determination unit 404 registers the edited color verification specification 3 that includes the chart 3 in the unregistered display area 605 on the color verification specification registration screen illustrated in Fig. 6B. A specific process will be described below.

In step S507, the measurement job generation unit 403 starts the color verification based on the user input. If the user who wants to start the color verification presses a color verification button 602 on the main menu screen illustrated in Fig. 6A, the screen transitions to the color verification specification selection screen illustrated in Fig. 6H. The UI control unit 402 controls these UI screens.

In step S508, if the user presses "color verification specification 3" in a display area 626 on the color verification specification selection screen in Fig. 6H, the measurement job generation unit 403 performs processing for generating a measurement job corresponding to each color verification specification 3. If the measurement job is generated, the printer to be a target of the color verification, the measurement device to be used, the color measurement conditions, and the chart and allowable value to be used in the color verification, which are registered in procedures in steps S501 to S506, are uniquely determined.

In step S509, the control apparatus 110 transmits a print job of printing the chart to the target printer based on the received image data. At this time, the control apparatus 110 performs color conversion on the received image data using an input profile and an output profile.

The input profile and the output profile are determined in advance based on the color verification specification selected in step S508. For example, in a case where the color verification for the Japan Color 2011 Lab certification (digital certification) is performed, a profile created based on the Japan Color 2011 is set to the input profile, and an output profile created by the target printer is set to the output profile. Accordingly, the image data can be subjected to color conversion for the Japan Color 2011 Lab certification (digital certification).

In step S510, the printer 1 that receives the print job executes print processing and outputs a chart based on the print job.

In step S511, the control apparatus 110 displays a chart measurement screen illustrated in Fig. 6J and instructs color measurement of the chart printed out from the target printer.

In step S512, if the user sets the chart and instructs start of measurement, the selected measurement device measures the color value of each patch on the chart.

In step S513, after completing the measurement, the selected measurement device stores acquired color measurement data and transmits it to the control apparatus 110.

In step S514, the control apparatus 110 receives the color measurement data from the selected measurement device and transfers the received data to the color verification apparatus 100.

In step S515, the verification processing unit 406 performs processing for verifying the color accuracy of the printer using the received data.

In step S516, the UI control unit 402 displays the verification result on the display unit 105. Fig. 6I illustrates a report result screen that displays the verification result. As illustrated in Fig. 6I, the average value and the maximum value of the color difference per patch and the color differences for primary colors (CMYK) are displayed together with a result indicating acceptable/unacceptable (pass/fail) for each verification item. This report result screen enables the user to grasp the color fluctuation state of the target printer.

In a case where the verification result is unacceptable (fail), the color fluctuation of the printer can be controlled within a specified range by recreating a print profile or performing a correction operation using a color correction function of the printer.

The foregoing is the description of an overall process in the color verification system according to the present embodiment. In conjunction with display for prompting a user to perform color measurement on the chart, the control apparatus 110 may issue a preparation instruction to the selected measurement device and cause the selected measurement device to perform calibration before starting measurement.

### <Color Determination Processing>

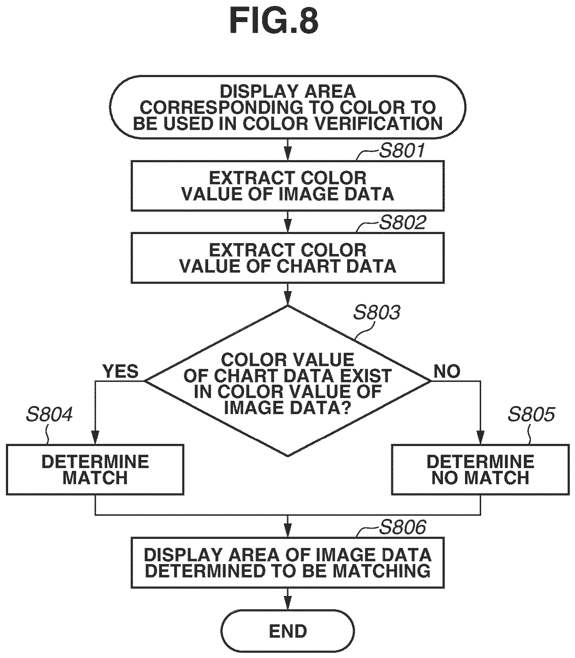

Next, a specific process in step S504 is described with reference to Fig. 8. In the flowchart in Fig. 8, a process is described in which an area in which the color(s) to be used in the color verification (the colors to be used in the chart acquired in step S502) is used is determined in the image data acquired in step S503.

A series of processes illustrated in the flowchart in Fig. 8 is realized by the CPU 101 of the color verification apparatus 100 loading a program corresponding to the color verification specification determination unit 404 from the ROM 102 to the RAM 103 and executing it.

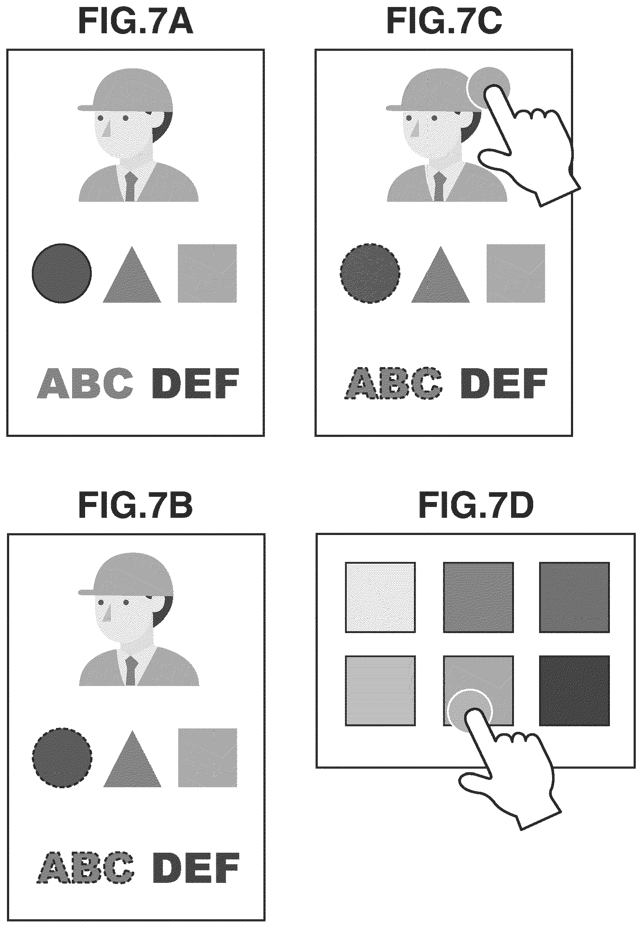

In step S801, the color verification specification determination unit 404 extracts the color values of the image data acquired in step S503. The image data refers to any image data that includes the key color of interest to the user, as illustrated in Fig. 7A. The method for extracting color values can be any commonly used technique; for example, the values may be extracted in order starting from the most frequently occurring value (mode) within the entire image data.

Alternatively, an algorithm such as the k-means method may be used to extract values by grouping the color values of the image data into several groups (clusters). The color values of the image data may be extracted by converting the image data into the L*a*b* color space and using the L*a*b* values, or by directly extracting the signal values of the image data, such as the RGB (RGB composition) or CMYK (CMYK composition).

In step S802, the color verification specification determination unit 404 extracts the color values of the chart acquired in step S502. The method of extracting the color values is similar to that in step S801.

In step S803, the color verification specification determination unit 404 determines whether any of the color values of the chart extracted in step S802 match the color values of the image data extracted in step S801. A commonly used method may be used for a determination method; for example, color matching may be determined based on whether the color difference (Fig. 15) based on the linear distance between the two color values (L*a*b*, RGB, CMYK) is a predetermined threshold or less. If the color difference is less than the predetermined threshold (YES in step S803), the processing proceeds to step S804. Otherwise (NO in step S803), the processing proceeds to step S805.

In step S804, the color verification specification determination unit 404 assigns a "match found" (flag 1) to the color values that have been determined to be matching (YES) in step S803 among the color values of the image data extracted in step S801.

In step S805, the color verification specification determination unit 404 assigns a "no match" (flag 0) to the color values that have been determined to be non-matching (NO) in step S803, among the color values of the image data extracted in step S801.

In step S806, the color verification specification determination unit 404 displays the area of the color values that have been assigned the "match found" (flag 1) among the color values of the image data extracted in step S801. Examples of a display method include enclosing the areas of the color values assigned the "match found" with a dotted line to indicate the matching areas to the user, as illustrated in Fig. 7B, or graying out the non-matching areas to highlight the matching area. The display method is, however, not limited to these examples.

### <Color Addition Processing>

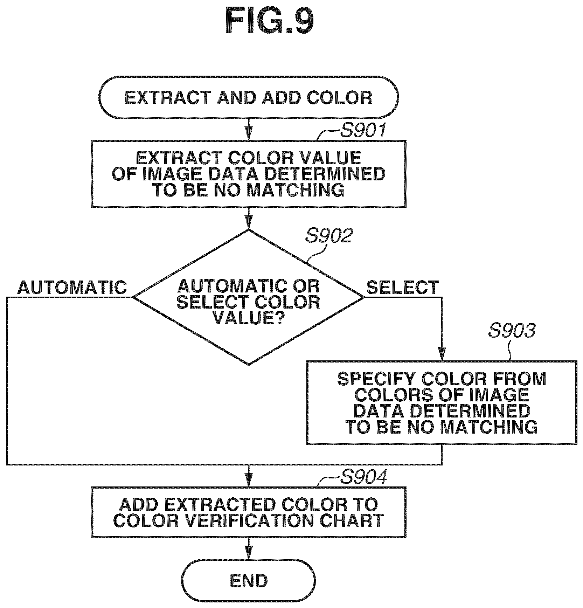

Specific operations in steps S505 and S506 will now be described with reference to Fig. 9. In the flowchart in Fig. 9, a process is described in which the color values that have been determined in step S505 to be absent from the image data in the color verification are extracted, and the extracted color values are added, in step S506, to the color verification specification and the color verification chart. A series of processes illustrated in the flowchart in Fig. 9 is realized by the CPU 101 of the color verification apparatus 100 loading a program corresponding to the color verification specification determination unit 404 from the ROM 102 to the RAM 103 and executing it.

In step S901, the color verification specification determination unit 404 acquires the color values that have been determined to be no-matching (flag 0) among the color values of the image data in step S805.

In step S902, the color verification specification determination unit 404 automatically adds the color values extracted in step S901 to the color verification specification and the color verification chart. Alternatively, the image data may be displayed to the user, allowing the user to pick out (select) the colors to be added, and then choose whether to add them to the color verification specification and the color verification chart. In a case of automatic addition ("automatic" in step S902), the processing proceeds to step S904. In a case of selection ("select" in step S902), the processing proceeds to step S903.

In step S903, the color verification specification determination unit 404 extracts a color by prompting the user to pick out the color to be added from among those determined to be non-matching (flag 0) in the image data. Specifically, the image data may be displayed as illustrated in Fig. 7C, and the user may be prompted to select a color to be added to the color verification specification and the color verification chart from among the colors determined to be non-matching (flag 0) in the image data. Alternatively, as illustrated in Fig. 7D, the colors determined to be non-matching (flag 0) in the image data among the color values of the image data are displayed in a patch format and the user is prompted to pick out the color value to be added.

In step S904, the color verification specification determination unit 404 adds the color value extracted in step S902 or S903 to the chart selected in step S502 and performs re-registration. Specifically, on the chart selection screen illustrated in Fig. 6D, the edited chart 3 is registered in an unregistered display area 613.

As illustrated in Fig. 2A, in a case where 3 patches are added to the chart in which 3 × 18 patches are arranged, the added patches may be arranged separately so that their positions within the chart are identifiable. Alternatively, the added patch(s) may be displayed in a manner distinguishable from the other patches (e.g., by changing the frame color thereof). Yet alternatively, the user may be allowed to specify the location of the patch(es) to be added within the chart. Next, the edited color verification specification 3 that includes the chart 3 is registered in the unregistered display area 605 on the color verification specification registration screen illustrated in Fig. 6B.

According to the present embodiment, a description has been provided of the process in which a document owned by a user is used to determine the areas corresponding to the colors to be used in color verification, the colors in the document that are not to be used in the color verification are extracted, and the extracted colors are added to a color verification chart.

However, a configuration may be adopted in which a document and the extracted color(s) may be managed as a history data and reused in editing another color verification specification to facilitate editing.

As described above, according to the present embodiment, in a case where color verification is executed using a color verification specification that is uniquely defined by a user, it is checked whether a key color defined by the user at the time of registering a color verification test is included in the color verification specification.

If the key color is not included, the process for incorporating it into the color verification specification has been described. Specifically, a document owned by a user is used to determine the areas corresponding to the colors to be used in color verification, the colors that are not to be used in the color verification are extracted from colors in the document, and the extracted colors are added to a color verification chart. Accordingly, a user-specific color verification specification can be easily created.

### [Second Embodiment]

According to the first embodiment, an aspect has been described in which a document owned by a user is used to determine the areas corresponding to the colors to be used in color verification, the colors in the document that are not to be used in the color verification are extracted, and the extracted colors are added to a color verification chart, thereby creating a user-specific color verification specification. In creating the color verification specification, it is desirable to concurrently register an allowable value and a target value regarding an evaluation item for the added color.

According to a second embodiment, an aspect is described that focuses on this point and registers selection of an evaluation item, an allowable value, and a target value for an added color. A description of the basic configuration of the color verification system, which is common to the first embodiment, is omitted.

A schematic diagram illustrating an overall configuration of the color verification system according to the second embodiment is similar to that of the first embodiment, and thus a description thereof is omitted.

Block diagrams illustrating hardware configurations of the color verification apparatus 100 and the control apparatus 110 according to the second embodiment are similar to those of the first embodiment, and thus descriptions thereof are omitted.

Block diagrams illustrating main functional configurations of the color verification apparatus 100 and the control apparatus 110 according to the second embodiment are similar to those in the first embodiment, and thus descriptions thereof are omitted.

A sequence diagram illustrating a process in the color verification system according to the second embodiment is similar to that of the first embodiment, and thus a description thereof is omitted.

### <Evaluation Item Addition Processing>

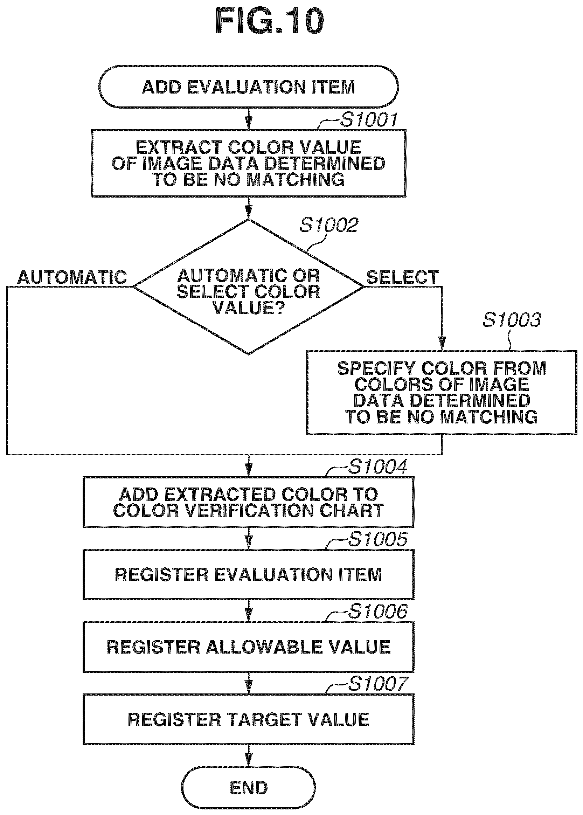

Next, operations in steps S505 and S506 are specifically described with reference to Fig. 10. In the flowchart in Fig. 10, a process is described in which three steps of "registering an evaluation item", "registering an allowable value", and "registering a target value" are added to the operations in steps S505 and S506 described in the first embodiment. A series of processes illustrated in the flowchart in Fig. 10 is realized by the CPU 101 of the color verification apparatus 100 loading a program corresponding to the color verification specification determination unit 404 from the ROM 102 to the RAM 103 and executing it.

Operations in steps S1001 to S1004 are similar to those in the first embodiment (corresponding to steps S901 to S904 in Fig. 9), and thus descriptions thereof are omitted.

In step S1005, the color verification specification determination unit 404 registers an evaluation item for the color extracted in step S1004. As illustrated in Fig. 6M, only "allowable value for color difference" in a display area 636 is registered for the selection of an evaluation item, and if it is acceptable to use the same evaluation method as the other colors, "allowable value for color difference" in the display area 636 is selected.

On the other hand, if another evaluation item is selected, "unregistered" in a display area 637 is pressed. Subsequently, the screen transitions to a selection screen for evaluation item details illustrated in Fig. 6N, on which a user selects a usage, so that the evaluation item corresponding to the usage is set to "unregistered" in the display area 637 in Fig. 6M and is selected as the evaluation item. Examples of usage include "brightness/depth" in a display area 639, "saturation" in a display area 640, "color" in a display area 641, "tint variation" in a display area 642, and the like. As another method, the evaluation items illustrated in Fig. 6N (e.g., ΔL, ΔC, ΔE00, and average ΔE00) may be directly selected.

In step S1006, the color verification specification determination unit 404 registers the allowable value regarding the evaluation item selected in step S1005. As for a method for determining the allowable value, as illustrated in Fig. 2D, a method may be used in which surrounding colors are also displayed based on the evaluation item(s) selected in step S1005 for the colors extracted in step S1004 (three colors in the example), and the allowable value is determined by prompting the user to select an allowable color. For example, if the evaluation item is "saturation", surrounding colors may be generated and displayed with the colors, extracted in step S1004, varied in a saturation direction.

If the evaluation item is "color difference", surrounding colors may be generated based on a quality rank defined by the Japanese Industrial Standards, and allowable colors may be selected by a user.

In step S1007, the color verification specification determination unit 404 registers the target value of the color extracted in step S1004. A method for calculating the target value will be described below.

### <Target Value Calculation Processing>

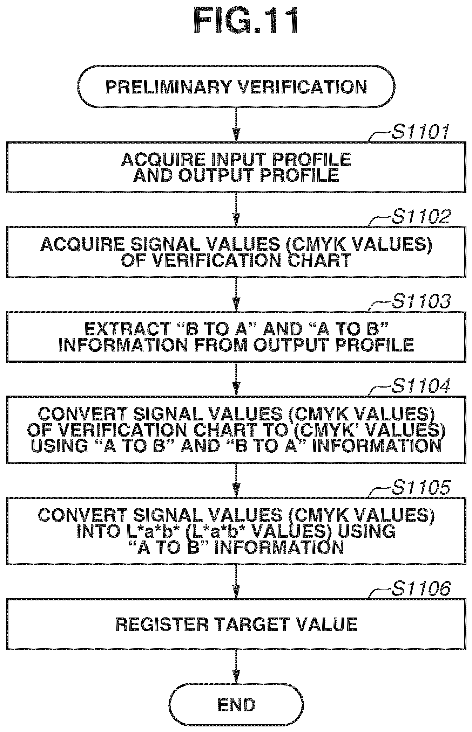

Next, a process for target value registration in step S1007 is described with reference to Figs. 11, 12, and 13.

In step S1101, the color verification specification determination unit 404 acquires the input profile and the output profile that are to be used in printing the chart in step S509. A basic profile configuration will be described below.

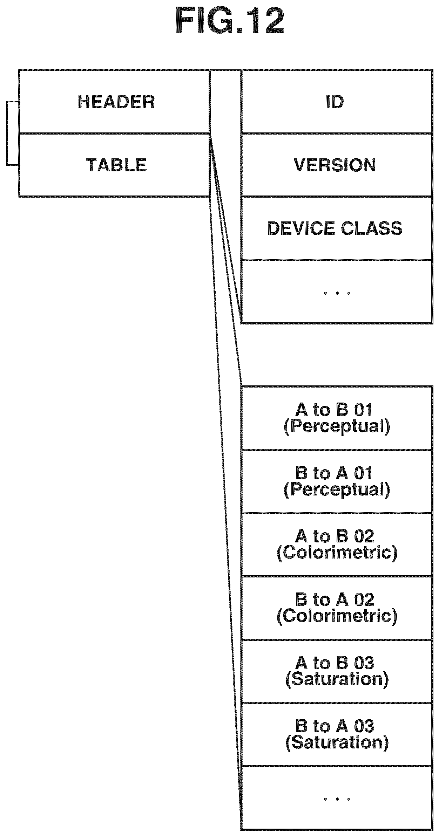

Fig. 12 is a schematic diagram illustrating a profile. The profile includes a header, which contains basic information regarding various profiles, and a table which contains information used in color matching processing. The header stores, for example, identification (ID) information, version information, device class information indicating a basic type of an output device, and the like. The table stores "B to A" information, which includes color processing parameters regarding a process of converting image data B in a device-independent Profile Connection Space (PCS) into image data A that is dependent on the color space of a specific output device.

In addition, the table also stores "A to B" information, which includes color processing parameters regarding a process of converting image data A, which depends on the color space of a specific device, into image data B in the device-independent PCS space.

These pieces of "B to A" information and "A to B" information are stored in correspondence with the corresponding color matching methods supported by a color matching processing module. Types of color matching methods include color matching that prioritizes tint (perceptual), colorimetric match color matching (colorimetric), and color matching that prioritizes saturation (saturation).

Here, "perceptual" is color matching suitable for images, such as pictures, and emphasizes a color gradation. "Colorimetric" is color matching suitable for images, such as logos, and is directed to reproducing a color that colorimetrically matches. "Saturation" is color matching suitable for images, such as graphs and computer graphics (CGs), and emphasizes color vividness.

In order to distinguish which color matching method these color processing parameters indicated in Fig. 12 correspond to, the numbers "01" for "perceptual", "02" for "colorimetric", and "03" for "saturation" are attached.

In step S1102, the color verification specification determination unit 404 acquires signal values (e.g., CMYK values) that configure the color verification chart acquired in step S508.

In step S1103, the color verification specification determination unit 404 extracts the "A to B" information and the "B to A" information corresponding to the color matching method to be used in printing the chart in step S509 using the output profile acquired in step S1101.

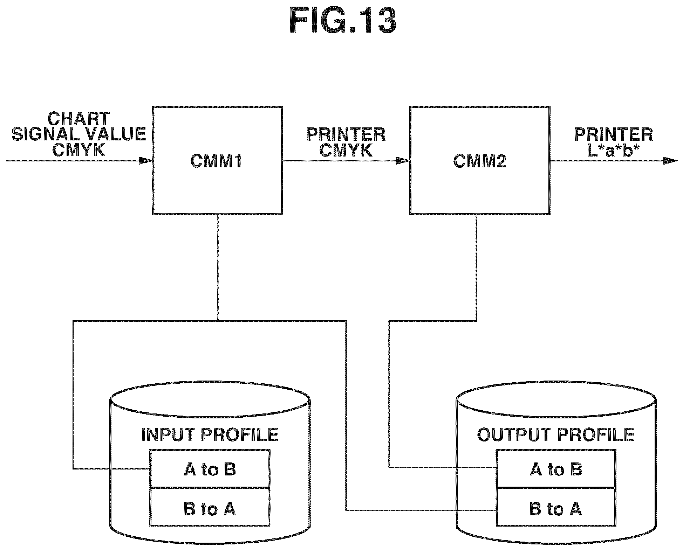

In step S1104, the color verification specification determination unit 404 executes processing for converting the CMYK values that configure the color verification chart acquired in step S1103 into CMYK data (CMYK' values) that depend on characteristics of the printer, which is the output device. A module "CMM1" illustrated in Fig. 13 executes this processing.

In this processing, the "A to B" information about the input profile and the "B to A" information about the output profile according to the specified color matching method are set in the module CMM1. Subsequently, color conversion is executed using the information to convert the chart CMYK values into the CMYK' values after color conversion.

In step S1105, the color verification specification determination unit 404 converts the CMYK data (CMYK' values) that depends on the characteristics of the printer calculated in step S1104 into PCS data (e.g., L*a*b* values) that indicates the characteristics of the printer. A module "CMM2" illustrated in Fig. 13 executes this processing. In this processing, the "A to B" information about the output profile is set in the module CMM2, and color conversion is executed using the information to convert printer CMYK values into PCS data (hereinbelow, referred to as printer L*a*b* values) that indicates the characteristics of the printer.

In step S1106, the color verification specification determination unit 404 registers the printer L*a*b* values calculated in step S1105 as the target value.

As described above, according to the present embodiment, a document owned by a user is used to determine the areas corresponding to the colors to be used in color verification, the colors in the document that are not used in the color verification are extracted, and the extracted colors are added to a color verification chart. Further, the selection of the evaluation item(s), the allowable value(s), and the target value(s) are registered for the added colors, thereby creating a user-specific color verification specification.

Accordingly, the allowable values and the target values regarding the corresponding evaluation items can be concurrently registered for the added color(s), and a user-specific color verification specification can be easily created.

The present disclosure is not limited to the above-described embodiments and can be modified in various ways based on the gist of the present disclosure, and it is not intended to exclude the various modifications from the scope of the present disclosure. In other words, the present disclosure also includes all configurations that combine each of the above-described embodiments and the modifications.

According to the present disclosure, a mechanism is provided that prompts the user, at the time of registering a color verification test, to check whether key colors of interest to the user are included in the color verification specification, and enables simplified incorporation of such colors if they are not included, thereby allowing the user to readily create a user-specific color verification specification.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (100, 110) configured to perform color measurement on a color patch arranged on a chart output by an image forming apparatus (130a-130c) and verify color accuracy of the image forming apparatus (130a-130c), the information processing apparatus (100, 110) comprising:
a first acquisition means (501) for acquiring a color verification specification;
a second acquisition means (404) for acquiring image data;
a determination means (404) for determining, in the image data acquired by the second acquisition means (404), a color corresponding to a color that does not exist in the color verification specification acquired by the first acquisition means (501); and
an addition means (404) for adding the color corresponding to the color that does not exist in the color verification specification to a color verification chart and the color verification specification.

2. The information processing apparatus (100, 110) according to claim 1, further comprising a display means (105) for displaying the color corresponding to the color that does not exist in the color verification specification acquired by the first acquisition means (501) as the color that does not exist in the color verification specification in the image data.

3. The information processing apparatus (100, 110) according to claim 1, further comprising a registration means (401) for registering an evaluation item, an allowable value, and a target value for a color that is determined by the determination means (404).

4. The information processing apparatus (100, 110) according to claim 3, further comprising a calculation means (404) for calculating, using a profile, a color value of the color corresponding to the color that does not exist in the color verification specification,
wherein the registration means (401) registers the color value calculated by the calculation means as the target value.

5. The information processing apparatus (100, 110) according to claim 3, wherein the registration means (401) registers a corresponding evaluation item according to a specified usage.

6. The information processing apparatus (100, 110) according to claim 3, further comprising a display means (105) for displaying a surrounding color of a color that is extracted as a color that does not exist in the color verification specification with respect to the evaluation item,
wherein the registration means (401) determines and registers an allowable value based on a selected color.

7. The information processing apparatus (100, 110) according to claim 1, further comprising a specification means (404) for specifying a location of a patch added to the color verification chart within the color verification chart.

8. The information processing apparatus (100, 110) according to claim 1, further comprising a display means (105) for displaying, in a manner distinguishable from other patches, a patch added to the color verification chart.

9. The information processing apparatus (100, 110) according to claim 1, further comprising:
a management means (401) for managing the image data and a color extracted as a color that does not exist in the color verification specification as history data; and
an editing means for using the color managed by the management means in editing another color verification specification.

10. The information processing apparatus (100, 110) according to claim 1, wherein the determination means (404) determines an area corresponding to a color to be used in the color verification specification acquired by the first acquisition means (501) based on whether a composition of a color value or a signal value is identical, regarding the image data acquired by the second acquisition means and the color to be used in the color verification specification.

11. A method for controlling an information processing apparatus (100, 110) configured to perform color measurement on a color patch arranged on a chart output by an image forming apparatus (130a-130c) and verify color accuracy of the image forming apparatus (130a-130c), the method comprising:
acquiring a color verification specification;
acquiring image data;
determining, in the acquired image data, a color corresponding to a color that does not exist in the acquired color verification specification; and
adding the color corresponding to the color that does not exist in the color verification specification to a color verification chart and the color verification specification.

12. A non-transitory computer-readable storage medium storing a program that when executed on a computer causes the computer to execute a method for controlling an information processing apparatus (100, 110) configured to perform color measurement on a color patch arranged on a chart output by an image forming apparatus (130a-130c) and verify color accuracy of the image forming apparatus (130a-130c), the method comprising:
acquiring a color verification specification;
acquiring image data;
determining, in the acquired image data, a color corresponding to a color that does not exist in the acquired color verification specification; and
adding the color corresponding to the color that does not exist in the color verification specification to a color verification chart and the color verification specification.
